# EUROPÄISCHE PATENTSCHRIFT

(11) **EP 2 894 995 B1**
(45) Veröffentlichungstag und Bekanntmachung des Hinweises auf die Patenterteilung: **24.10.2018**
(21) Anmeldenummer: 13791723.3
(22) Anmeldetag: 09.09.2013
(51) Int. Cl.: A21C 5/04

(54) **AUSWIEGETROMMEL**
DIVIDING DRUM
TAMBOUR DE PESÉE DE PRÉCISION

(30) Priorität: 13.09.2012 AT 503872012
(43) Veröffentlichungstag der Anmeldung: 22.07.2015
(73) Patentinhaber: König Maschinen Gesellschaft mbH, 8045 Graz (AT)
(72) Erfinder: SAUSENG, Robert, A-8061 St. Radegrund (AT)
(74) Vertreter: Wildhack & Jellinek
(86) Internationale Anmeldenummer: PCT/AT2013/050178
(87) Internationale Veröffentlichungsnummer: WO 2014/040105

(56) Entgegenhaltungen:
- WO-A1-2011/128351
- DE-B- 1 260 403
- US-A- 4 052 836
- US-A- 4 210 402

## Beschreibung

Die Erfindung betrifft eine Auswiegetrommel zum Auswiegen von Teig in einer Vorrichtung zum Portionieren und Bearbeiten von Teig gemäß dem Oberbegriff des Patentanspruches 1.

Aus dem Stand der Technik sind Auswiegetrommeln bekannt, die über einen Antrieb schrittweise oder kontinuierlich rotiert werden und über Kolben Teig portionieren und auswiegen. Die Kolben werden über verschiedene Verstellmechanismen, die mit den Kolben verbunden sind, z. B. Kurvenscheiben, radial bewegt. Eine genaue Einstellung des Hubvolumens der Kolben und damit die Einstellung einer exakten Auswiegemenge des Teiges sind nur schwer zu erreichen. Bei einer gewünschten Veränderung der auszuwiegenden Teigmenge sind der Tausch der Kolben und die Veränderung der zugehörigen Verstellmechanismen mit einem hohen Aufwand verbunden.

Beispielsweise ist aus der US 4052 836 A (SHAW RICHARD A) ist eine Auswiegetrommel mit vier parallel zu ihrer Drehachse verlaufenden Längsstangen bekannt. Die Längstangen werden bei Drehung des Trommelgehäuses entlang einer Kurvenführung radial verstellt. Die Auswiegetrommel weist weiters eine Anzahl von Kolben auf, die bezüglich der Längsstangen radial an dem Trommelgehäuse weiter außen angeordnet sind, wobei diese mittels der Längsstangen radial verstellt werden. Zwischen den Kolben und den Längsstangen sind jeweils eine Stempelstange angeordnet, die radial verstellbar ausgebildet sind, wobei die Stempelstangen, Längsstangen und Kolben druckkraftübertagend gekoppelt sind.

Aufgabe der Erfindung ist es daher, eine exakte Einstellung der Auswiegemenge und eine leichte Tauschbarkeit der Kolben und Wirkmechanismen zu gewährleisten. Die Erfindung löst diese Aufgabe bei einer Auswiegetrommel der eingangs genannten Art mit den im Kennzeichen des Anspruches 1 angegebenen Merkmalen.

Eine einfache Möglichkeit zum Austausch der Kolben und Vorteilhafte Veränderung der auswiegbaren Teigmenge wird gewährleistet, wenn das Trommelgehäuse auswechselbare bzw. lösbare, parallel zur Drehachse des Trommelgehäuses ausgerichtete Trommelleisten aufweist, die im oberflächennahen Bereich des Trommelgehäuses angeordnet und mit Ausnehmungen versehen sind, in denen die Kolben in radialer Richtung des Trommelgehäuses geführt verschiebbar sind.

Eine sehr schnell und einfach lösbare Kraftkopplung wird erreicht, wenn die einzelnen Kolben an ihrer radial innen liegenden und der jeweiligen Stempelstange zugewandten Endfläche ein Kolbendruckstück und die Stempelstangen an ihrer dem jeweiligen Kolben zugewandten Fläche ein oberes Stempeldruckstück tragen, wobei die jeweiligen Druckstücke aneinander anlegbar und in derselben radialen Richtung ausgerichtet sind.

Um eine zuverlässige Kraftübertragung der Längsstange an die Stempelstange zu erreichen ist vorgesehen, dass die Längsstange an einem der jeweiligen Stempelstange zugewandten Flächenbereich, vorzugsweise in eine in der Längsstange ausgebildeten Vertiefung versenkte, Leistendruckstücke trägt und die der Längsstange zugewandten Endflächen der Stempelstangen untere Stempeldruckstücke tragen, wobei die jeweiligen Druckstücke aneinander anlegbar und in derselben radialen Richtung ausgerichtet sind.

Eine einfache Montierbarkeit der Druckstücke wird erreicht, wenn die jeweiligen Druckstücke im Querschnitt T-förmig ausgebildet sind und mit ihrem Schaft, der mit einem Gewinde ausgebildet ist, in den Kolben und/oder in die Stempelstange und/oder in die Längsstange eingeschraubt sind.

Eine besonders vorteilhafter Ausgleich von Fertigungstoleranzen bzw. eine vorteilhafte und schnelle Einstellung der auswiegbaren Teigmenge wird erreicht, wenn zwischen dem Kolben und dem Balken des T-förmig ausgebildeten Kolbendruckstückes und/oder zwischen dem Balken des T-förmig ausgebildeten oberen Stempeldruckstückes und der radial außen liegenden Stirnfläche der Stempelstange und/oder zwischen dem Balken des T-förmig ausgebildeten unteren Stempeldruckstückes und der radial innen liegenden Stirnfläche der Stempelstange zumindest eine, vorzugsweise ringförmige, Passscheibe vorgegebener Dicke auswechselbar bzw. lösbar eingelegt ist.

Eine einfache und besonders effektive Kraftübertragung wird erreicht, wenn die Kolben, die jeweilige Stempelstange und die Längsstange über die an den Druckstücken ausgebildeten, aneinander anliegenden bzw. anlegbaren Flächen druckkraftübertragend gekoppelt sind.

Um ein Herausfallen der Kolben aus den Trommelleisten zu verhindern und damit die Montage zu erleichtern wird vorgesehen, dass die einzelnen Kolben an ihrem radial innen liegenden Ende ein Rückhalteelement tragen, das Ausleger aufweist, die eine größere radiale Ausdehnung als die Ausnehmung der Trommelleiste aufweisen und einen den Kolbenweg begrenzenden bzw. den oberen Totpunkt des Kolbens bestimmenden Anschlag ausbilden.

Ein modularer, schnell wechselbarer Aufbau sieht vor, dass Gewindebolzen vorgesehen sind, die in die radial innen liegenden Endflächen der Kolben eingeschraubt sind und jeweils zwischen sich und dem Kolben die jeweiligen Rückhalteelemente einklemmen, dass die Kolbendruckstücke in die Gewindebolzen eingeschraubt sind, und dass Passscheiben vorgegebener Dicke zwischen den Gewindebolzen und den Balken der T-förmig ausgebildeten Kolbendruckstücke eingelegt sind.

Bei einer besonders bevorzugten Ausführungsform einer Auswiegetrommel wird eine sichere Verschiebbarkeit der Stempelstangen erreicht, wenn in einer parallel zur Drehachse des Trommelgehäuses verlaufenden Leiste ausgebildete oder von einem Gehäuseteil getragene Führungen vorgesehen sind, in denen die Stempelstangen, vorzugsweise mit ihrem radial innen liegenden Endbereich, geführt sind. Insbesondere bei dieser Ausführungsform wird eine effektive Abdichtung der Auswiegetrommel und Schmierung der radial innenliegenden bewegten Teile erreicht, wenn in die Führungen Trommeldichtungen eingelegt sind, die an der Mantelfläche der Stempelstangen anliegen, wobei die Trommeldichtungen einen radial innen liegenden Trommelraum gegen einen radial außen liegenden Trommelraum abdichten.

Es ist von besonderem Vorteil, wenn eine Vorrichtung zum Portionieren und/oder Bearbeiten von Teig mit einer erfindungsgemäßen Auswiegetrommel versehen ist.

Weitere Vorteile und Ausgestaltungen der Erfindung ergeben sich aus der Beschreibung und den beiliegenden Zeichnungen.

Ausführungsformen der Erfindung sind in den Zeichnungen schematisch dargestellt und werden im Folgenden unter Bezugnahme auf die Zeichnungen beispielsweise beschrieben.

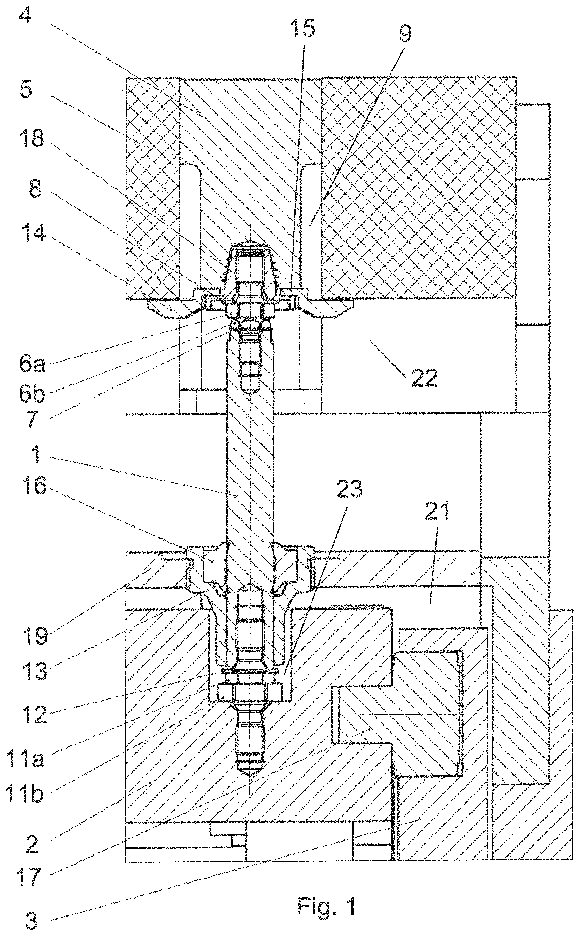

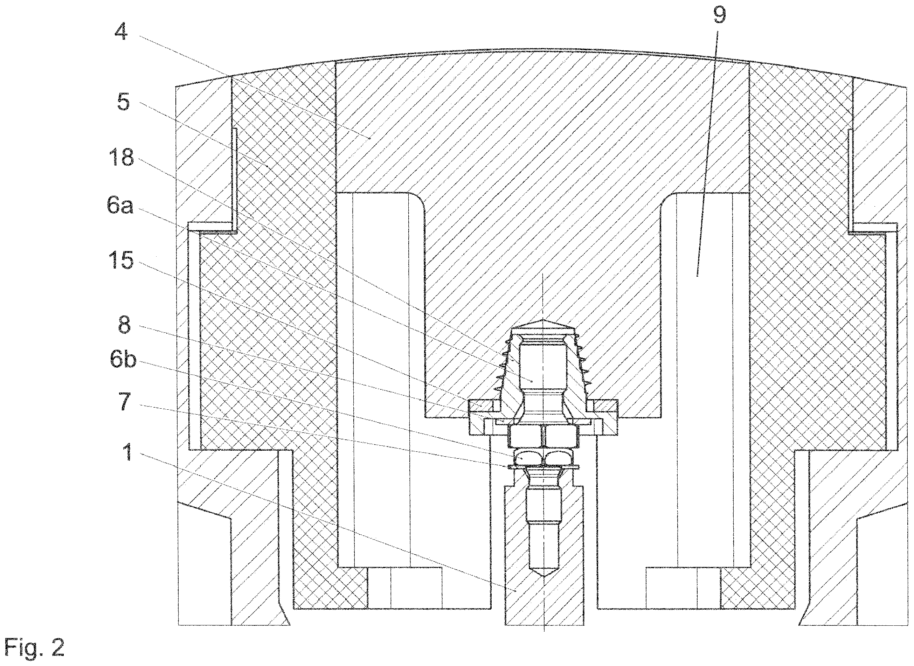

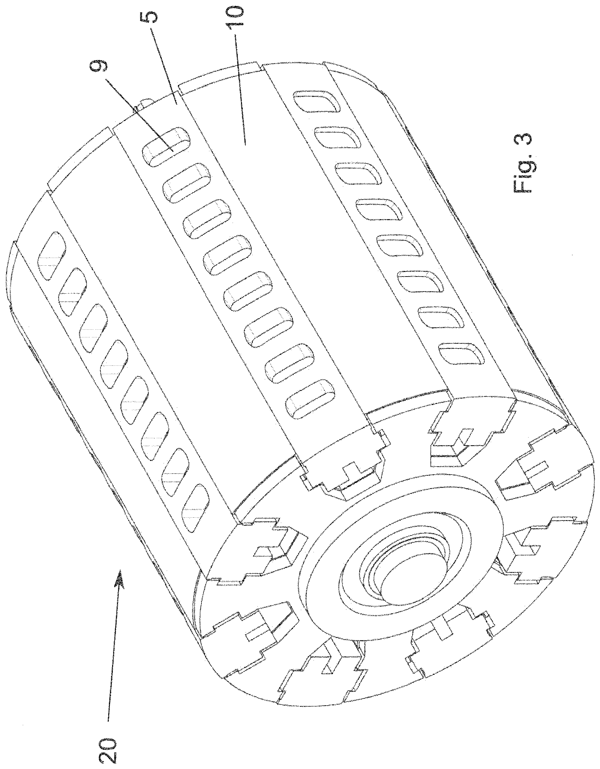

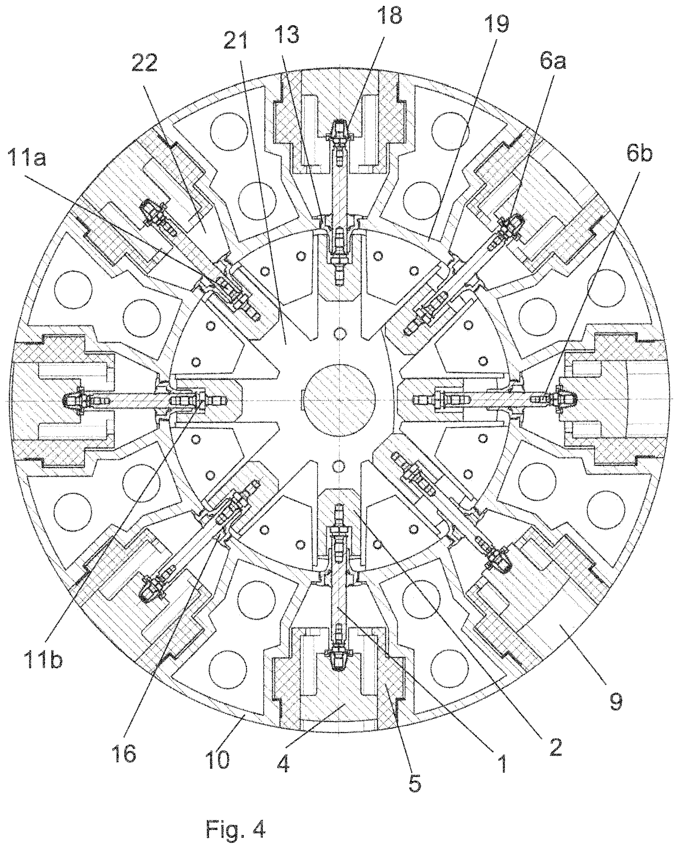

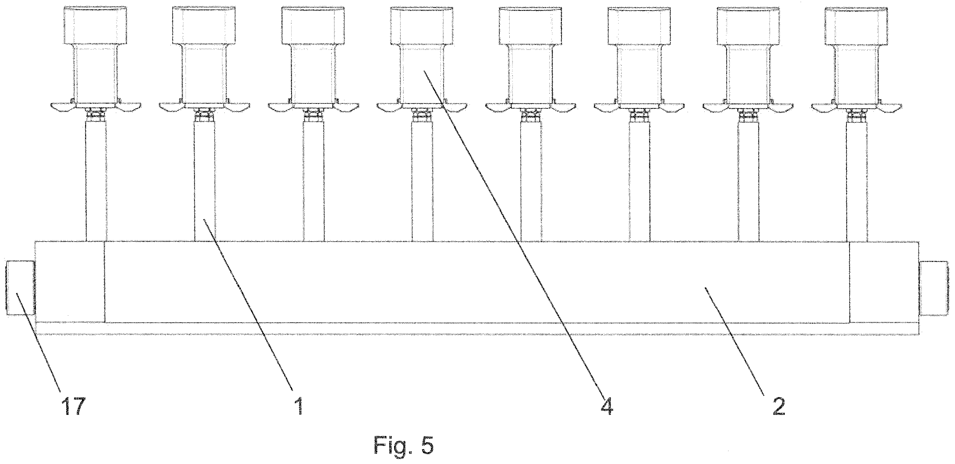

Es zeigen schematisch **Fig. 1** eine Schnittansicht einer Stempelstange, **Fig. 2** einen Teilschnitt der Auswiegetrommel gemäß **Fig. 1**, **Fig. 3** eine perspektivische Ansicht der Auswiegetrommel, **Fig. 4** eine Schnittansicht der Auswiegetrommel und **Fig. 5** den Wirkmechanismus der Auswiegetrommel.

**Fig. 1** zeigt eine Schnittansicht einer Längsstange 2 einer Auswiegetrommel 20 zum Portionieren von Teig in einer Vorrichtung zum Portionieren und Bearbeiten von Teig. Dabei wird Teig in einer Vorportioniereinrichtung vorportioniert und als Teigportion von einem Auswiegeschieber in Aufnahmeöffnungen 9 der Auswiegetrommel 20 eingebracht.

Die Auswiegetrommel 20 umfasst eine Längsstange 2, die bei Drehung der Auswiegetrommel 20 durch eine Kurvenführung, vorzugsweise einer Kurvenscheibe 3, über eine Kurvenrolle 17 radial verstellt wird. Die radiale Auslenkung der Längsstange 2 wird über eine Stempelstange 1 an einen Kolben 4 weitergegeben. Der Kolben 4 ist in der Ausnehmung 9 radial geführt, die in einer Trommelleiste 5 ausgebildet ist.

Die Trommelleisten 5 sind auswechselbar im oberflächennahen Bereich des Trommelgehäuse 10 angeordnet. In der radial innen liegenden Endfläche des Kolbens 4 ist ein Gewindebolzen 18 eingeschraubt. Der Gewindebolzen 18 klemmt ein Rückhalteelement 15 an der radial innen liegenden Endfläche des Kolbens 4 fest. Das Rückhalteelement 15 umfasst Ausleger 14, die eine größere radiale Ausdehnung als die Ausnehmung 9 der Trommelleiste 5 aufweisen und dadurch ein radiales Ausfallen des Kolbens 4 verhindern. In den Gewindebolzen 18 ist in seiner radial innen liegenden Fläche ein Kolbendruckstück 6a, vorteilhaft in Form einer Sechskantschraube, eingeschraubt. Das Kolbendruckstück 6a besitzt eine ebene, glatte Stirnfläche, die der Stempelstange 1 zugewandt ist. In das Ende der Stempelstange 1 ist gegenüber der Stirnfläche des Kolbendruckstückes 6a ein oberes Stempeldruckstück 6b eingeschraubt. Das obere Stempeldruckstück 6b ist dabei vorteilhafterweise in Form einer Sechskantschraube mit ebener Stirnfläche und gegebenenfalls abgerundeter Stirnflächenkante ausgebildet. Die Stirnflächen der beiden Druckstücke 6a, 6b werden im Betrieb aneinander angelegt und dienen der Übertragung von Druckkräften. Zwischen der Stempelstange 1 und dem oberen Stempeldruckstück 6b ist an der radial außen liegenden Stirnfläche der Stempelstange 1 eine Passscheibe 7 mit vorgegebener Dicke eingelegt. Die Passscheibe 7 dient dabei der Längenverstellung bzw. -einstellung der Stempelstange 1 und vor allem dem Ausgleich von Differenzen in der Teigmenge in der Aufnahmeöffnung 9.

Zwischen dem Gewindebolzen 18 und dem Kolbendruckstück 6a ist an der radial innen liegenden Stirnfläche des Gewindebolzens 15 eine Passscheibe 8 eingelegt. Diese Passscheibe 8 soll vor allem Fertigungstoleranzen des Kolbens 4 ausgleichen.

In einer radial zur Drehachse des Trommelgehäuse 10 verlaufenden Vertiefung 23 an der Längsstange 2 ist ein im Querschnitt T-förmiges Leistendruckstück 11b vorteilhaft in Form einer Sechskantschraube eingeschraubt. Gegenüber der Stirnfläche des Leistendruckstückes 11b ist ein unteres Stempeldruckstück 11a vorteilhaft in Form einer Sechskantschraube in die Stempelstange 1 eingeschraubt. Die Druckstücke 11a, 11b weisen aneinander anliegende, ebene Stirnflächen auf.

Zwischen der radial innen liegende Stirnfläche der Stempelstange 1 und dem unteren Stempeldruckstück 11a ist eine ringförmige Passscheibe 12 eingelegt. Die Passscheibe 12 ermöglicht vor allem einen Ausgleich der Fertigungstoleranzen der Längsstange 2.

Die Stempelstage 1 ist in ihrem radial innenliegenden Endbereich in einer Führung 13 geführt. Die Führung 13 ist dabei an einer parallel zur Drehachse der Trommel 10 verlaufenden Gehäusewand 19 abgestützt, die den mit Schmiermittel, vorteilhafterweise mit Schmieröl, gefüllten inneren Trommelraum 21 vom äußeren Trommelraum 22 des Trommelgehäuses 10 trennt. Eine in die Führung 13 integrierte Trommeldichtung 16 setzt an der Mantelfläche der Stempelstange 1 an und dichtet den inneren Trommelraum 21 gegen den äußeren Trommelraum 22 ab.

Die Darstellung gemäß **Fig. 2** ist gegenüber **Fig. 1** um 90° entlang der Achse der Stempelstange 1 gedreht und zeigt eine vergrößerte Ansicht des radial außen liegenden Teils der Auswiegetrommel 20. Der Kolben 4 ist in der Auswiegetrommel 20 in der Ausnehmung 9 der Trommelleiste 5 radial geführt. Die Passscheibe 8 ist zwischen dem Kolbendruckstück 6a und dem Gewindebolzen 18 geklemmt und bestimmt die Gesamtlänge vom Kolbendruckstück 6a mit Kolben 4 und Gewindebolzen 18.

Zwischen dem oberen Stangendruckstück 6b und der Stempelstange 1 ist die Passscheibe 7 eingelegt. Mit der Passscheibe 7 erfolgt die Endeinstellung der Gesamtlänge der Stempelstange 1 samt oberem Stempeldruckstück 6b. Das Rückhalteelement 15 wird über den in den Kolben 4 eingeschraubten Gewindebolzen 18 fixiert.

**Fig. 3** zeigt eine perspektivische Ansicht der Auswiegetrommel 20. An das Trommelgehäuse 10 der Auswiegetrommel 20 sind längs des Umfangs gleichmäßig verteilte Trommelleisten 5 eingelegt. Die Trommelleisten 5 weisen in Richtung der Drehachse der Auswiegetrommel 20 mehrere, hintereinander liegende, die jeweilige Trommelleiste 5 durchsetzende Ausnehmungen 9 für die Kolben 4 auf.

In **Fig. 4** ist eine Schnittansicht der Auswiegetrommel 20 senkrecht zu ihrer Drehachse dargestellt. Die radial über den Umfang der Auswiegetrommel 20 verteilten Kolben 4 sind dabei in unterschiedlichen Positionen dargestellt. Die radial geführten Längsstangen 2 übertragen über die Druckstücke 11a, 11b die ihnen erteilte radiale Verstellbewegung auf die Stempelstangen 1, welche die radiale Verstellung über die Druckstücke 6a, 6b an die Kolben 4 weiterleiten. Weiters zeigt **Fig. 4** die die Führungen 13 tragende Gehäusewand 19 des Trommelgehäuses 10.

**Fig. 5** zeigt eine Frontansicht einer Längsstange 2 mit Stempelstangen 1 und zugehörenden Kolben 4. Die Kolben 4 und die Stempelstangen 1 sind entlang der Längsachse der Längsstange 2 hintereinander angeordnet.

Die Passscheiben 7, 8 und 12 sind auf eine vorgegebene Dicke exakt geschliffen. Für den Betrieb der Auswiegetrommel ist eine Vielzahl von unterschiedlich dicken Passscheiben 7, 8 und 12 vorhanden, um die Gesamtlänge der Stempelstangen 1 und der davon abhängigen Auswiegemenge des Teiges einfach verändern zu können.

## Patentansprüche

1. Auswiegetrommel mit zumindest einer parallel zu ihrer Drehachse verlaufenden Längsstange (2), die bei Drehung des Trommelgehäuses (10), vorzugsweise mit zumindest einer Kurvenführung (3), radial verstellbar ist, und mit einer Anzahl von bezüglich der Längsstange (2) radial weiter außen liegenden Kolben (4), die von der Längsstange (2) jeweils über eine Stempelstange (1) radial verstellbar sind, wobei die einzelnen Stempelstangen (1) längenverstellbar ausgeführt sind, **dadurch gekennzeichnet, dass** die Längsstange (2) an einem der jeweiligen Stempelstange (1) zugewandten Flächenbereich, vorzugsweise in eine in der Längstange (2) ausgebildeten Vertiefung (23) versenkte, Leistendruckstücke (11b) trägt und die der Längsstange (2) zugewandten Endflächen der Stempelstangen (1) untere Stempeldruckstücke (11a) tragen, wobei die jeweiligen Druckstücke (11a, 11b) aneinander anlegbar und in derselben radialen Richtung ausgerichtet sind.

2. Auswiegetrommel nach Anspruch 1, **dadurch gekennzeichnet, dass** das Trommelgehäuse (10) auswechselbare bzw. lösbare, parallel zur Drehachse des Trommelgehäuses (10) ausgerichtete Trommelleisten (5) aufweist, die im oberflächennahen Bereich des Trommelgehäuses (10) angeordnet und mit Ausnehmungen (9) versehen sind, in denen die Kolben (4) in radialer Richtung des Trommelgehäuses (10) geführt verschiebbar sind.

3. Auswiegetrommel nach Anspruch 1 oder 2, **dadurch gekennzeichnet, dass** die einzelnen Kolben (4) an ihrer radial innen liegenden und der jeweiligen Stempelstange (1) zugewandten Endfläche ein Kolbendruckstück (6a) und die Stempelstangen (1) an ihrer dem jeweiligen Kolben (4) zugewandten Fläche ein oberes Stempeldruckstück (6b) tragen, wobei die jeweiligen Druckstücke (6a, 6b) aneinander anlegbar und in derselben radialen Richtung ausgerichtet sind.

4. Auswiegetrommel nach einem der Ansprüche 1 bis 3, **dadurch gekennzeichnet, dass** die jeweiligen Druckstücke (6a, 6b; 11a, 11b) im Querschnitt T-förmig ausgebildet sind und mit ihrem Schaft, der mit einem Gewinde ausgebildet ist, in den Kolben (4) und/oder in die Stempelstange (1) und/oder in die Längsstange (2) eingeschraubt sind.

5. Auswiegetrommel nach einem der Ansprüche 1 bis 4, **dadurch gekennzeichnet, dass** zwischen dem Kolben (4) und dem Balken des T-förmig ausgebildeten Kolbendruckstückes (6a) und/oder zwischen dem Balken des T-förmig ausgebildeten oberen Stempeldruckstückes (6b) und der radial außen liegenden Stirnfläche der Stempelstange (1) und/oder zwischen dem Balken des T-förmig ausgebildeten unteren Stempeldruckstückes (11a) und der radial innen liegenden Stirnfläche der Stempelstange (1) zumindest eine, vorzugsweise ringförmige, Passscheibe (7, 8, 12) vorgegebener Dicke auswechselbar bzw. lösbar eingelegt ist.

6. Auswiegetrommel nach einem der Ansprüche 1 bis 5, **dadurch gekennzeichnet, dass** die Kolben (4), die jeweilige Stempelstange (1) und die Längsstange (2) über die an den Druckstücken (6a, 6b; 11a, 11b) ausgebildeten aneinander anliegenden bzw. anlegbaren Flächen druckkraftübertragend gekoppelt sind.

7. Auswiegetrommel nach einem der Ansprüche 2 bis 6, **dadurch gekennzeichnet, dass** die einzelnen Kolben (4) an ihrem radial innen liegenden Ende ein Rückhalteelement (15) tragen, das Ausleger (14) aufweist, die eine größere radiale Ausdehnung als die Ausnehmung (9) der Trommelleiste (5) aufweisen und einen den Kolbenweg begrenzenden bzw. den oberen Totpunkt des Kolbens (4) bestimmenden Anschlag ausbilden.

8. Auswiegetrommel nach einem der Ansprüche 1 bis 7, **dadurch gekennzeichnet, dass** Gewindebolzen (18) vorgesehen sind, die in die radial innen liegenden Endflächen der Kolben (4) eingeschraubt sind, jeweils zwischen sich und den Kolben (4) die jeweiligen Rückhalteelemente (15) einklemmen, dass die Kolbendruckstücke (6a) in die Gewindebolzen (18) eingeschraubt sind, und dass Passscheiben (8) vorgegebener Dicke zwischen den Gewindebolzen (18) und den Balken der T-förmig ausgebildeten Kolbendruckstücke (6a) eingelegt sind.

9. Auswiegetrommel insbesondere nach einem der Ansprüche 1 bis 8, **dadurch gekennzeichnet, dass** in einer parallel zur Drehachse des Trommelgehäuses (10) verlaufenden Leiste ausgebildete oder von einem Gehäuseteil (19) getragene Führungen (13) vorgesehen sind, in denen die Stempelstangen (1), vorzugsweise mit ihrem radial innen liegenden Endbereich, geführt sind.

10. Auswiegetrommel nach einem der Ansprüche 1 bis 9, **dadurch gekennzeichnet, dass** in die Führungen (13) Trommeldichtungen (16) eingelegt sind, die an der Mantelfläche der Stempelstangen (1) anliegen, wobei die Trommeldichtungen (16) einen radial innen liegenden Trommelraum (21) gegen einen radial außen liegenden Trommelraum (22) abdichten.

11. Vorrichtung zum Portionieren und/oder Bearbeiten von Teig mit einer Auswiegetrommel nach einem der Ansprüche 1 bis 10.

## Claims

1. A dividing drum with at least one longitudinal rod (2) running parallel to its rotary axis, which is radially adjustable when rotating the drum housing (10), preferably with at least one cam guide (3), and with a number of pistons (4) being positioned radially further outwards in relation to the longitudinal rod (2), which are each radially adjustable by the longitudinal rod (2) by means of a ram rod (1), wherein the individual ram rods (1) have an adjustable length, **characterised in that** the longitudinal rod (2) on a surface area that is facing the respective ram rod (1), preferably countersunk into a depression (23) formed in the longitudinal rod (2), supports ledge pressure pieces (11b) and the end surfaces of the ram rods (1) that are facing the longitudinal rod (2) support lower ram pressure pieces (11a), wherein the relevant pressure pieces (11a, 11b) can be placed against one another and are orientated in the same radial direction.

2. The dividing drum according to claim 1, **characterised in that** the drum housing (10) has replaceable or detachable drum ledges (5) being orientated towards the rotary axis of the drum housing (10), which are arranged in the near-surface area of the drum housing (10) and provided with recesses (9), into which the pistons (4) are slidably guided in the radial direction of the drum housing (10).

3. The dividing drum according to claim 1 or 2, **characterised in that** the individual pistons (4) support on their radially inner end surface that is facing the relevant ram rod (1) a piston pressure piece (6a) and the ram rods (1) support on their surface that is facing the relevant piston (4) an upper ram pressure piece (6b), wherein the relevant pressure pieces (6a, 6b) can be placed against one another and are orientated in the same radial direction.

4. The dividing drum according to one of claims 1 to 3, **characterised in that** the relevant pressure pieces (6a, 6b; 11a, 11b) are formed to be T-shaped in the cross-section and are screwed with their shaft, which is formed with a thread, into the piston (4) and/or into the ram rod (1) and/or into the longitudinal rod (2).

5. The dividing drum according to one of claims 1 to 4, **characterised in that** between the piston (4) and the bar of the T-shaped piston pressure piece (6a) and/or between the bar of the T-shaped upper ram pressure piece (6b) and the radially outward front surface of the ram rod (1) and/or between the bar of the T-shaped lower ram pressure piece (11a) and the radially inward front surface of the ram rod (1) at least one, preferably circular, adjustable washer (7, 8, 12) of predefined thickness is replaceably or detachably inserted.

6. The dividing drum according to one of claims 1 to 5, **characterised in that** the pistons (4), the relevant ram rod (1) and the longitudinal rod (2) are coupled in a pressure force-transmitting manner by means of the surfaces that are abutting or can be abutting each other and formed on the pressure pieces (6a, 6b; 11a, 11b).

7. The dividing drum according to one of claims 2 to 6, **characterised in that** the individual pistons (4) support on their radially inward end a retaining element (15) having the cantilever (14), said pistons having a greater radial expansion than the recess (9) of the drum ledge (5) and forming a stopper limiting the piston stroke or defining the upper dead centre of the piston (4).

8. The dividing drum according to one of claims 1 to 7, **characterised in that** threaded bolts (18) are provided, which are screwed into the radially inward end surfaces of the piston (4), the relevant retaining elements (15) clamp between this and the pistons (4), that the piston pressure pieces (6a) are screwed into the threaded bolts (18), and that adjusting washers (8) of predefined thickness are inserted between the threaded bolts (18) and the bar of the T-shaped piston pressure pieces (6a).

9. The dividing drum particularly according to one of claims 1 to 8, **characterised in that** guides (13) being formed in a ledge running parallel to the rotary axis of the drum housing (10) or supported by a housing part (19) are provided, into which the ram rods (1), preferably with their radially inward end area, are guided.

10. The dividing drum according to one of claims 1 to 9, **characterised in that** in the guides (13) drum seals (16) are inserted, which abut the lateral surface of the ram rods (1), wherein the drum seals (16) seal a radially inward drum chamber (21) against a radially external drum chamber (22).

11. A device for portioning and/or processing dough with a dividing drum according to one of claims 1 to 10.

## Revendications

1. Tambour de pesée de précision comprenant au moins une tige longitudinale (2) s'étendant parallèlement à son axe de rotation, ladite tige étant radialement déplaçable lors de la rotation du carter de tambour (10), de préférence à l'aide d'au moins un guide à came (3) et comprenant un certain nombre de pistons (4) situés radialement au-delà à l'extérieur de la tige longitudinale (2), ces pistons étant réglables radialement par la tige longitudinale (2) respectivement par l'intermédiaire d'une tige-piston (1), les différentes tiges-pistons (1) étant réglables en longueur, **caractérisé en ce que** la tige longitudinale (2) porte, au niveau d'une zone de surface orientée vers la tige-piston (1) respective, de préférence dans un renfoncement (23) formé dans la tige longitudinale (2), des éléments de pression en baguette escamotés (11b) et les surfaces d'extrémité tournées vers la tige longitudinale (2) des tiges-pistons (1) portent des éléments de pression de piston inférieurs (11a), dans lequel les éléments de pression respectifs (11a, 11b) peuvent être appliqués les uns contre les autres et sont orientés dans la même direction radiale.

2. Tambour de pesée de précision selon la revendication 1, **caractérisé en ce que** le carter de tambour (10) présente des baguettes de tambour (5) interchangeables ou détachables, orientées parallèlement à l'axe de rotation du carter de tambour (10), qui sont disposées dans la zone proche de la surface supérieure du carter de tambour (10) et dotées de cavités (9), dans lesquelles les pistons (4) sont guidés en direction radiale du carter de tambour (10) de manière coulissante.

3. Tambour de pesée de précision selon la revendication 1 ou 2, **caractérisé en ce que** les différents pistons (4) portent, au niveau de leur surface d'extrémité tournée vers la tige-piston (1) respective et se trouvant radialement à l'intérieur un élément de pression de piston (6a) et les tiges-pistons (1) portent, sur leur surface tournée vers le piston respectif (4), un élément de pression de tige supérieur (6b), dans lequel les différents éléments de pression (6a, 6b) peuvent être appliqués les uns contre les autres et sont orientés dans la même direction radiale.

4. Tambour de pesée de précision selon une des revendications 1 à 3, **caractérisé en ce que** les différents éléments de pression (6a, 6b, 11a, 11b) sont formés, en section transversale, en forme de T et sont vissés avec leur arbre, qui est formé avec un filet, dans le piston (4) et/ou dans les tiges-pistons (1) et/ou dans la tige longitudinale (2).

5. Tambour de pesée de précision selon une des revendications 1 à 4, **caractérisé en ce que**, entre le piston (4) et la branche de l'élément de pression de piston (6a) en forme de T et/ou entre la branche de l'élément de pression de tige supérieur (6b) en forme de T et la surface avant disposée radialement vers l'extérieur de la tige-piston (1) et/ou entre la branche de l'élément de pression de tige (11a) inférieur en forme de T et la surface avant disposée radialement vers l'intérieur de la tige-piston (1), au moins une rondelle d'ajustage (7, 8, 12), de préférence annulaire, d'une épaisse prédéfinie est insérée de manière interchangeable ou détachable.

6. Tambour de pesée de précision selon une des revendications 1 à 5, **caractérisé en ce que** le pistons (4), les tiges-pistons (1) respectives et la tige longitudinale (2) sont accouplés en transmission de force de pression par le biais de surfaces pouvant être appliquées ou appliquées les unes contre les autres sur les éléments de pression (6a, 6b, 11a, 11b).

7. Tambour de pesée de précision selon une des revendications 2 à 6, **caractérisé en ce que** les différents pistons (4) portent, sur leur extrémité disposée radialement à l'intérieur, un élément de retenue (15), qui présente des flèches (14), qui présentent une extension radiale supérieure à la cavité (9) des baguettes de tambour (5) et forment une butée délimitant la course de piston ou déterminant le point mort supérieur du piston (4).

8. Tambour de pesée de précision selon une des revendications 1 à 7, **caractérisé en ce que** des boulons filetés (18) sont prévus, qui sont vissés dans les surfaces d'extrémité disposées radialement à l'intérieur des pistons (4), coincent respectivement entre eux-mêmes et le piston (4) l'élément de retenue (15) respectif, **en ce que** les éléments de pression de piston (6a) sont vissés dans les boulons filetés (18) et **en ce que** des rondelles d'ajustage (8) d'épaisseur prédéfinie sont insérées entre les boulons filetés (18) et les branches des éléments de pression de piston (6a) en forme de T.

9. Tambour de pesée de précision notamment selon une des revendications 1 à 8, **caractérisé en ce que**, dans une baguette s'étendant parallèlement à l'axe de rotation du carter de tambour (10), des guidages (13) formés ou portés par une partie de carter (19) sont prévus, dans lesquels les tiges-pistons (1) sont guidées, de préférence avec leur zone d'extrémité disposée radialement à l'intérieur.

10. Tambour de pesée de précision selon une des revendications 1 à 9, **caractérisé en ce que**, dans les guidages (13), des joints de tambour (16) sont insérés, qui reposent sur la surface d'enveloppe des tiges-pistons (1), dans lequel les joints de tambour (16) scellent un espace de tambour (21) disposé radialement à l'intérieur par rapport à un espace de tambour (22) disposé radialement à l'extérieur.

11. Dispositif de division et/ou de transformation de pâte comprenant un tambour de pesée de précision selon une des revendications 1 à 10.
